# EUROPEAN PATENT SPECIFICATION

(11) **EP 4 107 047 B1**
(45) Date of publication and mention of the grant of the patent: **10.12.2025**
(21) Application number: 21887879.1
(22) Date of filing: 21.12.2021
(51) Int. Cl.: B62D 1/18, B60N 2/14, B60N 2/24, B62D 1/22

(54) **JOYSTICK ANTI-HITTING SEAT STEERING MECHANISM FOR WORK MACHINES**
STEUERKNÜPPEL MIT SITZAUFPRALLSCHUTZLENKMECHANISMUS FÜR ARBEITSMASCHINEN
MÉCANISME DE DIRECTION DE SIÈGE ANTI-FRAPPE DE MANETTE DE COMMANDE POUR MACHINES DE TRAVAIL

(30) Priority: 10.02.2021 TR 202101908
(43) Date of publication of application: 28.12.2022
(73) Proprietor: Hidromek-Hidrolik Ve Mekanik Makina Imalat Sanayi Ve Ticaret Anonim Sirketi, Sincan/Ankara (TR)
(72) Inventor: TELISIK, Hakan, ANKARA (TR); ERSOY, Müslüm, ANKARA (TR); BASAL, Tugrul, ANKARA (TR); BOZKURT, Mustafa, ANKARA (TR)
(74) Representative: Kayahan, Senem
(86) International application number: PCT/TR2021/051445
(87) International publication number: WO 2022/173395

(56) References cited:
- EP-A1- 1 886 866
- WO-A1-2018/051317
- US-A- 4 059 171
- US-A- 5 036 942
- US-A- 5 052 512
- US-A1- 2008 035 408

## Description

### Technical Field of the Invention

The invention relates to a mechanism used in the seats and steering wheels of work machines.

In particular, the invention relates to a mechanism that prevents the joystick on the seat from hitting the steering wheel by placing the steering wheel in the upright position at 180°rotation of the seat in order to u se the rear attachments of the work machine.

### State of the Art

Backhoe loader or excavator loader construction machines, used in various works such as loading, transportation, excavation, are traditionally composed of a tractor body equipped with attachments that perform loading, transportation, excavation on the front and back. The aforementioned attachments are controlled by the operator via the joystick.

The operator must move the seat 180° in order to us e the rear attachments on construction equipment in the present art. The joystick on the seat prevents the turning movement by hitting the steering wheel during this movement. The operator firstly must change the position of the steering wheel in the most upright position whenever they want to move the seat. In addition, the joystick can be damaged by hitting the steering wheel because the operator tries to rotate the seat without adjusting the steering position during operation, and this also causes a danger to occupational safety. This necessitates a structuring that prevents the joystick from hitting the steering wheel when the steering wheel is moved 180°, in the known state of the art.

Patent Application No. EP1710119 may be shown as an example of the state of the art as a result of the research conducted on the literature. The aforementioned document relates to a mechanism that allows the operator's seat to rotate between two opposite vehicle operating stations in the cab. The said document mentions a mechanism that moves the seat in a more complex manner rather than rotating the seat in a single pivot axis to prevent the operator from hitting the compartment of the array during the rotation of the seat in a single pivot axis. However, it is not possible to lift the steering wheel and change its position during the rotation of the seat by the aforementioned mechanism.

Another example of the state of the art is Patent Application No. EP2635456. The said document relates to an operator's station provided with a driver's seat which can rotate about a vertical axis along an intermediate position from at least a first working position to a second working position. It is not possible to lift the steering wheel and change its position during the rotation of the seat in the said invention. Another example of the state of the art is Patent Application No. WO 2018/051317 A1, which discloses the preamble of the independent claim. The said document relates to a reconfigurable cabin, in particular to a reconfigurable cabin for industrial vehicles. The cabin is provided with vertical lateral walls, a horizontal base wall, and a substantially horizontal upper wall. It is not possible to lift the steering wheel and change its position during the rotation of the seat in the said invention.

Consequently, the foregoing problems and insufficient solutions thereof require making an improvement in the related technical field.

### Summary of the invention

The present invention relates to a joystick anti-shock seat steering mechanism for work machines which eliminates the foregoing disadvantages and offers novel advantages to the related technical field.

The main object of the invention is to prevent t11e joystick on the seat from hitting the steering wheel by placing the steering wheel in the upright position at 180° rotation of tile seat in order to use the rear attachments of the machine.

The object of the invention is to ensure that t11e steering wheel is brought upright without any adjustment by the operator rotating the seat 180° to use the rear attachments.

Another object of the invention is to eliminate the damages and occupational safety risks caused by the joystick hitting the steering wheel.

The invention is a mechanism that allows changing the position of the steering wheel on the steering column at 180°rotation of the seat in the work machine and
- the slide associated with the seat of the work machine and rotating 180°with the seat,
- seat trigger mechanism triggered by at least one wheel sliding on the lower surface of the slide by the rotational movement of the seat,
- the steering trigger mechanism, which is connected to the steering column and allows the position of the steering to be changed by triggering the seat trigger mechanism,
- the transmission element, which is connected to the seat trigger mechanism by one end and to the steering trigger mechanism by the other end, and transmits the movement of the seat trigger mechanism to the steering trigger mechanism.

The structural and characteristic features and all the advantages of the invention will be understood more clearly by reference to the following figures and the detailed explanation thereof. Therefore, the evaluation should be made by taking these figures and detailed explanations into consideration.

### Figures for a Better Understanding of the Invention

**Figure 1****:** The disassembled view of the mechanism of the invention.
**Figure 2****:** The perspective view of the mechanism of the invention.
**Figure 3****:** The view of the mechanism of the invention, mounted on the seat and steering column.

### List of the Reference Numbers

**10.** Seat
**11.** Joystick
**20.** Slide
**30.** Seat trigger mechanism
**31.** Wheel
**40.** Transmission element
**50.** Steering trigger mechanism
**60.** Connection sheet
**70.**Shock absorber
**71.**Shock absorber rod
**80.**Steering column
**90.**Steering wheel

### Detailed Description of the Invention

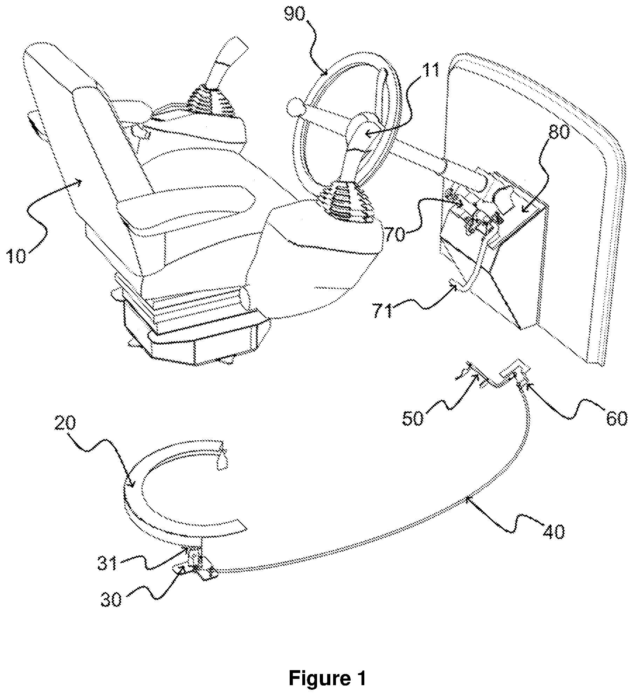

In Figure 1, the disassembled view of the mechanism of the invention is given. Accordingly, the mechanism in its most basic form comprises the slide (20) which is associated with the seat (10) of the work machine and rotates 180° with the seat (10), the seat trigger mechanism (30) which is triggered by a wheel (31) which slides on the lower surface of the slide (20) by the rotational movement of the seat (10), the steering trigger mechanism (50) which moves by the seat trigger mechanism (30), the transmission element (40) which transfers the movement of the seat trigger mechanism (30) to the steering trigger mechanism (50), the shock absorber (70) which opens and closes by the steering trigger mechanism (50) and changes the position of the steering wheel (90).

The slide (20) in the form of C is connected to the lower side of the seat (10), which has a joystick (11) and rotates 180°. The slide (20) rotates together with the seat (10).

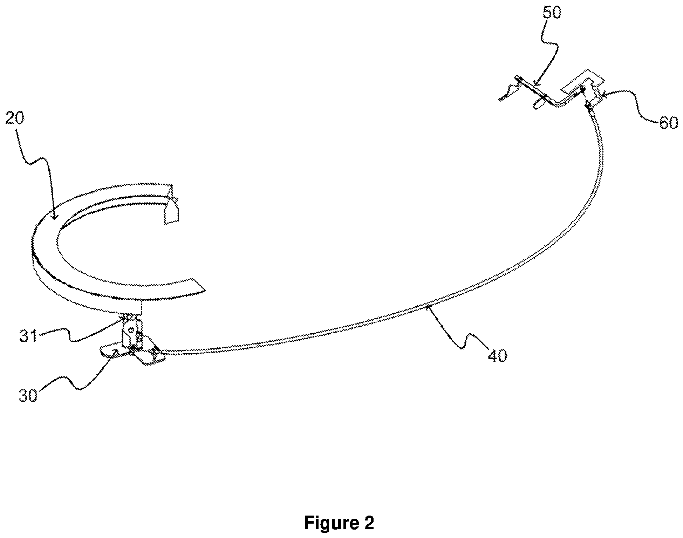

The seat trigger mechanism (30) is associated to the lower surface of the slide (20). The seat trigger mechanism (30) has at least one wheel (31) which slides on the lower surface of the slide (20) by the rotational movement of the seat (10) as shown in Figure 2. The seat trigger mechanism (30) is triggered by sliding movement on the lower surface of the slide (20) of the said wheel (31).

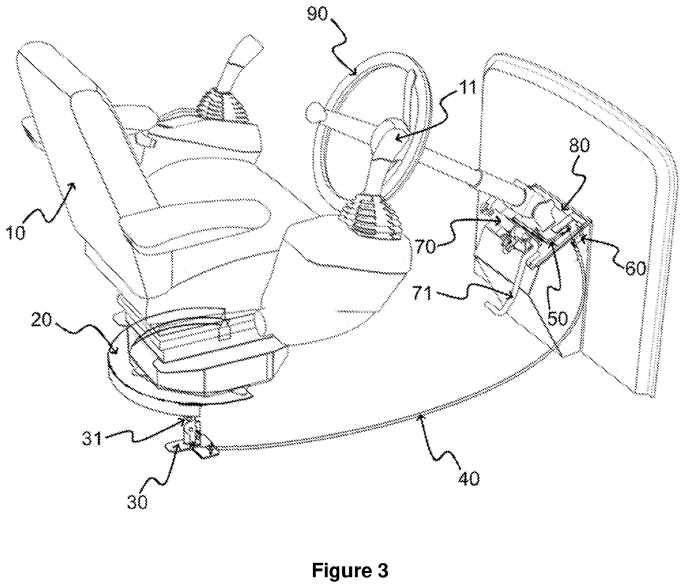

The position of the steering wheel (90) on the steering column (80) is changed by the shock absorber (70) connected to the steering column (80). The shock absorber (70) is opened and closed by the shock absorber rod (71) to change the position of the steering wheel (90). The steering trigger mechanism (50) is connected on the steering column (80) by means of the connection sheet (60), and said steering trigger mechanism (50) is associated with the shock absorber rod (71) on the steering column (80), as shown in Figure 3, so that the steering wheel (90) can be brought to the upright position by driving the rotational movement of the seat (10).

The seat trigger mechanism (30) associated to the lower surface of the slide (20) is also connected to the steering trigger mechanism (50) associated to the shock absorber rod (71) by means of a transmission element (40). The transmission element (40) is preferably wire or rope. One end of the transmission element (40) is connected to the seat trigger mechanism (30) and the other end is connected to the steering trigger mechanism (50). Thus, the movement of the seat trigger mechanism (30) is transferred to the steering trigger mechanism (50) by the transmission element (40) and the position of the steering wheel (90) is changed by the steering trigger mechanism (50) opening and closing the shock absorber (70).

*The working principle of the mechanism subject to the invention is as follows;*

The slide (20) rotates together with the seat (10) when the seat (10) rotates 180°. The wheel (31) associated to the lower surface of the slide (20) makes a sliding movement on the lower surface of the slide (20) and the seat trigger mechanism (30) is triggered with this movement.

The triggering movement of the seat trigger mechanism (30) is transferred to the steering trigger mechanism (50) by the transmission element (40). The steering trigger (50) pulls the shock absorber rod (71) and the shock absorber (70) is opened. The position of the steering wheel (90) changes to upright position with the opening of the shock absorber (70). This prevents the joystick (11) on the seat (10) from hitting the steering wheel (90).

## Claims

1. A mechanism that allows changing the position of a steering wheel (90) on a steering column (80) at 180° rotation of a seat (10) in a work machine and prevents a joystick (11) on the seat (11) from hitting the steering wheel (90) **characterized by** comprising:
- a slide (20) associated with the seat (10) of the work machine and rotating 180° with the seat (10),
- a seat trigger mechanism (30) which is triggered by at least one wheel (31) which slides on the lower surface of the slide (20) by the rotational movement of the seat (10),
- a steering trigger mechanism (50), which is connected to the steering column (80) and allows the position of the steering wheel (90) to be changed by triggering the seat trigger mechanism (30),
- a transmission element (40), which is connected to the seat trigger mechanism (30) by one end and to the steering trigger mechanism (50) by the other end, and transmits the movement of the seat trigger mechanism (30) to the steering trigger mechanism (50).

2. The mechanism according to claim 1, **characterized by comprising a** shock absorber (70) that has the shock absorber rod (71) associated with the steering trigger mechanism (50) on the said steering column (80) and that allows the position of the steering wheel (90) to be changed by opening and closing by means of the steering trigger mechanism (50).

3. The mechanism according to claim 1, **characterized by comprising a** connection sheet (60) that enables the said steering trigger mechanism (50) to be connected to the steering column (80).

4. The mechanism according to claim 1, **characterized in that** said slide (20) is in the form of C.

5. The mechanism according to claim 1, **characterized in that** said transmission element (40) is preferably wire or rope.

## Patentansprüche

1. Ein Mechanismus, der bei einer 180°-Drehung eines Sitzes (10) in einer Arbeitsmaschine eine Änderung der Position eines Lenkrads (90) an einer Lenksäule (80) ermöglicht und verhindert, dass ein Joystick (11) auf dem Sitz (11) das Lenkrad (90) berührt, **dadurch gekennzeichnet, dass** er umfasst:
- einen Schlitten (20), der dem Sitz (10) der Arbeitsmaschine zugeordnet ist und sich zusammen mit dem Sitz (10) um 180° dreht,
- einen Sitz-Auslösemechanismus (30), der durch mindestens ein Rad (31) ausgelöst wird, welches sich infolge der Drehbewegung des Sitzes (10) auf der Unterseite des Schlittens (20) bewegt,
- einen Lenk-Auslösemechanismus (50), der mit der Lenksäule (80) verbunden ist und durch Auslösen des Sitz-Auslösemechanismus (30) eine Änderung der Position des Lenkrads (90) ermöglicht,
- ein Übertragungselement (40), das mit einem Ende mit dem Sitz-Auslösemechanismus (30) und mit dem anderen Ende mit dem Lenk-Auslösemechanismus (50) verbunden ist und die Bewegung des Sitz-Auslösemechanismus (30) auf den Lenk-Auslösemechanismus (50) überträgt.

2. Mechanismus nach Anspruch 1, **dadurch gekennzeichnet, dass** er einen Stoßdämpfer (70) umfasst, dessen Stoßdämpferstange (71) an dem genannten Lenk-Auslösemechanismus (50) an der Lenksäule (80) angeordnet ist und der das Ändern der Position des Lenkrads (90) durch Öffnen und Schließen mittels des Lenk-Auslösemechanismus (50) ermöglicht.

3. Mechanismus nach Anspruch 1, **dadurch gekennzeichnet, dass** er ein Verbindungsblech (60) umfasst, das den genannten Lenk-Auslösemechanismus (50) mit der Lenksäule (80) verbindet.

4. Mechanismus nach Anspruch 1, **dadurch gekennzeichnet, dass** der genannte Schlitten (20) C-förmig ist.

5. Mechanismus nach Anspruch 1, **dadurch gekennzeichnet, dass** das genannte Übertragungselement (40) vorzugsweise ein Draht oder ein Seil ist.

## Revendications

1. Mécanisme qui, lors d'une rotation de 180° d'un siège (10) dans une machine de travail, permet de modifier la position d'un volant (90) sur une colonne de direction (80) et empêche un joystick (11) sur le siège (11) de heurter le volant (90), **caractérisé en ce qu'**il comprend :
- une glissière (20) associée au siège (10) de la machine de travail et tournant de 180° avec le siège (10),
- un mécanisme de déclenchement de siège (30), déclenché par au moins une roue (31) qui glisse sur la surface inférieure de la glissière (20) par le mouvement de rotation du siège (10),
- un mécanisme de déclenchement de direction (50), relié à la colonne de direction (80) et permettant de modifier la position du volant (90) par déclenchement du mécanisme de déclenchement de siège (30),
- un élément de transmission (40), relié par une extrémité au mécanisme de déclenchement de siège (30) et par l'autre extrémité au mécanisme de déclenchement de direction (50), et transmettant le mouvement du mécanisme de déclenchement de siège (30) au mécanisme de déclenchement de direction (50).

2. Mécanisme selon la revendication 1, **caractérisé en ce qu'**il comprend un amortisseur (70) dont la tige d'amortisseur (71) est associée au mécanisme de déclenchement de direction (50) sur ladite colonne de direction (80) et qui permet de modifier la position du volant (90) par ouverture et fermeture au moyen du mécanisme de déclenchement de direction (50).

3. Mécanisme selon la revendication 1, **caractérisé en ce qu'**il comprend une tôle de liaison (60) qui permet de relier ledit mécanisme de déclenchement de direction (50) à la colonne de direction (80).

4. Mécanisme selon la revendication 1, **caractérisé en ce que** ladite glissière (20) est de forme en C.

5. Mécanisme selon la revendication 1, **caractérisé en ce que** ledit élément de transmission (40) est de préférence un fil ou une corde.
